Europäisches Patentamt

European Patent Office

Office européen des brevets

(11) Veröffentlichungsnummer: **0 200 242 B1**

(12) # EUROPÄISCHE PATENTSCHRIFT

(45) Veröffentlichungstag der Patentschrift:
08.08.90

(21) Anmeldenummer: 86200489.2

(22) Anmeldetag: 21.03.86

(51) Int. Cl.⁵: **C03B 19/04**, C03B 19/06,
C03B 37/012

(54) **Verfahren und Vorrichtung zur Herstellung von Glaskörpern.**

(30) Priorität: 29.03.85 DE 3511451

(43) Veröffentlichungstag der Anmeldung:
10.12.86 Patentblatt 86/45

(45) Bekanntmachung des Hinweises auf die Patenterteilung:
08.08.90 Patentblatt 90/32

(84) Benannte Vertragsstaaten:
DE FR GB IT NL SE

(56) Entgegenhaltungen:
EP-A- 0 029 590
EP-A- 0 123 191

(73) Patentinhaber: **Philips Patentverwaltung GmbH,
Wendenstrasse 35 Postfach 10 51 49,
D-2000 Hamburg 1(DE)**

(84) Benannte Vertragsstaaten: **DE**

(73) Patentinhaber: **N.V. Philips' Gloeilampenfabrieken,
Groenewoudseweg 1, NL-5621 BA Eindhoven(NL)**

(84) Benannte Vertragsstaaten: **FR GB IT NL SE**

(72) Erfinder: **Clasen, Rolf, Dr. Dipl.-Phys.,
Schlossparkstrasse 36, D-5100 Aachen(DE)**

(74) Vertreter: **Nehmzow-David, Fritzi-Maria et al, Philips
Patentverwaltung GmbH
Wendenstrasse 35 Postfach 10 51 49,
D-2000 Hamburg 1(DE)**

ACTORUM AG

## Beschreibung

Die Erfindung betrifft ein Verfahren zur Herstellung von Glaskörpern, bei dem aus dem Ausgangsmaterial für den Glaskörper in Form einer wässerigen Suspension mit hochdispersem Feststoffanteil ein poröser Grünkörper geformt und dieser anschließend gereinigt und gesintert wird.

Die Erfindung bezieht sich weiter auf eine Vorrichtung zur Durchführung eines solchen Verfahrens, wie sie in dem Oberbegriff des Anspruchs 26 angegeben und als solche bekannt ist.

Das eingangs genannte Verfahren ist als solches bekannt und ist insbesondere geeignet zur Herstellung von Vorformen für optische Wellenleiter aus Quarzglas.

Zur Herstellung von hochreinen Quarzglaskörpern, insbesondere Vorformen für optische Wellenleiter, sind Verfahren bekannt, bei denen ein poröser Grünkörper aus hochdispersen $SiO_2$-Glasteilchen hergestellt wird, wonach dieser poröse Grünkörper zunächst in z.B. einer chlorhaltigen Atmosphäre bei Temperaturen im Bereich von 600 bis 900°C gereinigt wird. Die Sinterung zu kompaktem, transparentem Glas erfolgt dann bei Temperaturen im Bereich um 1500°C; die Höhe der Sintertemperatur ist abhängig von der Größe der $SiO_2$-Teilchen und der Homogenität des Grünkörpers. Bei der Verarbeitung von hochdispersen Quarzglaspulvern ist ein erheblicher apparativer Aufwand (Vorformen für die Herstellung eines handhabbaren Grünkörpers und Pressen für die Verdichtung dieses Grünkörpers) erforderlich, um schließlich einen Grünkörper zu erhalten, der die für eine effiziente Sinterung, d.h. Sinterung bei Temperaturen ≤ 1550°C zu einem blasen- und schlierenfreien Glaskörper, ausreichende hohe Dichte aufweist. Ein derartiges Verfahren zur Herstellung einer Vorform für optische Wellenleiter ist z.B. aus DE-C 3 240 355 bekannt.

Um Grünkörper ausreichender Dichte herstellen zu können, ist es auch bekannt, von hochdispersen $SiO_2$-Suspensionen auszugehen, die zu einem Grünkörper verformt werden. Aus DE-A 2 925 309 ist ein Verfahren bekannt, bei dem eine $SiO_2$-Suspension in oder auf ein Trägerrohr aufgesprüht wird. Nachteilig bei diesem Verfahren ist, daß einmal hohe Anforderungen an eine gleichmäßig arbeitende Sprühvorrichtung gestellt werden müssen und daß eine Reinigung des erhaltenen Grünkörpers in einer Verunreinigungen bindenden heißen Gasatmosphäre nicht möglich ist, da das Trägerrohr nicht porös ist.

Der Erfindung liegt die Aufgabe zugrunde, ein Verfahren und eine Vorrichtung der eingangs genannten Art zur Herstellung von hochreinen Glaskörpern zu schaffen, mit denen ein Grünkörper erhalten wird, der porös genug ist, daß er in einem Zwischenerhitzungsschritt in einer mit vorliegenden Verunreinigungen reagierenden Gasatmosphäre gut gereinigt werden kann, der jedoch eine so hohe Verdichtung aufweist, daß der anschließende Sinterschritt ohne zusätzliche Verdichtungsmaßnahmen des gereinigten Grünkörpers erfolgen kann.

Diese Aufgabe wird mit dem erfindungsgemäßen Verfahren dadurch gelöst, daß der Grünkörper durch Trennung der Phasen der Suspension mittels Elektrophorese abgeschieden wird.

Eine Vorrichtung zur Durchführung dieses Verfahrens ist gekennzeichnet durch eine zentrisch in dem Gefäß angeordnete, der Form des herzustellenden Grünkörpers entsprechende poröse Membran, innerhalb welcher zentrisch eine Kathode angeordnet ist, wobei der Innenraum der Membran zur Aufnahme von nach Phasen zu trennendem Ausgangsmaterial in Form einer Suspension vorgesehen und der Raum zwischen der Membran und einer im Abstand zur Membran angeordneten Anode mit einer elektrisch leitenden Flüssigkeit ausgefüllt ist, wobei die Anode und die Kathode über Elektrodenanschlüsse mit einer nicht dargestellten Spannungsquelle elektrisch verbunden sind.

Bei der elektrophoretischen Abscheidung der Feststoffpartikel in Form von Ausgangsmaterial für einen Glaskörper aus einer wässerigen Suspension ergibt sich das Problem, daß an der Anode nicht nur die negativ geladenen Feststoffpartikel, insbesondere sind dies Quarzglasteilchen, abgeschieden werden, sondern es wird bei der Abscheidung bei Spannungen > 1V gleichzeitig Sauerstoff frei, der sich ebenfalls an der Anode abscheidet und damit in die anwachsende Feststoffschicht eingebaut wird und zu Poren innerhalb des auf diese Weise gebildeten Grünkörpers führt, die nur unter erhöhtem Aufwand (d.h. Temperaturen höher als 1550°C) dicht sinterbar sind. Dieses Problem kann umgangen werden, wenn beispielsweise eine nichtwässerige Suspension eingesetzt wird. Es bringt für eine industrielle Fertigung von hochreinen, blasen- und schlierenfreien Quarzglaskörpern jedoch erhebliche Vorteile, wenn mit wässerigen Suspensionen gearbeitet werden kann. Zur Vermeidung des Sauerstoffeinbaues in die anwachsende Feststoffschicht wird nach einer vorteilhaften Weiterbildung der Erfindung nun so vorgegangen, daß der Feststoffanteil der Suspension auf einer porösen Membran mit Poren eines Durchmessers, der kleiner als der mittlere Teilchendurchmesser der in der Suspension vorhandenen Feststoffteilchen ist, abgeschieden wird, wobei die Membran zwischen der Anode und der Kathode angeordnet und der Raum zwischen der Membran und der Anode mit einer elektrisch leitenden Flüssigkeit gefüllt wird.

Nach vorteilhaften Weiterbildungen des Verfahrens nach der Erfindung wird als Ausgangsmaterial für den Glaskörper eine wässerige Suspension, die $SiO_2$-Partikel eines Durchmessers im Bereich von 10 bis 500 nm, vorzugsweise 15 bis 100 nm, mit einem mittleren Teilchendurchmesser von 40 nm bei einem Feststoff:Wasser-Gewichtsverhältnis von 1:1 bis 1:4 eingesetzt. Hiermit ist der Vorteil verbunden, daß Grünkörper erreicht werden können mit einer vorteilhaft hohen Dichte, die 35 bis 60%, vorzugsweise 50% der Dichte kompakten Quarzglases beträgt.

Nach einer vorteilhaften Weiterbildung des Verfahrens nach der Erfindung wird eine poröse Membran eingesetzt, die Poren eines Porendurchmessers < 10 nm und > 0,14 nm hat. Der Porendurchmesser der Membran ist dabei so gewählt, daß die hochdispersen Feststoffpartikel mit einem mittleren Teilchendurchmesser von 40 nm auf der Membran festgehalten werden, kleinere Ionen, wie z.B. OH-Ionen mit einem Durchmesser von 0,14 nm, die Membran jedoch passieren können.

Vorteilhafterweise kann als Membran ein poröser Kunststoffschlauch eingesetzt werden, wie er z.B. für Dialyseverfahren eingesetzt wird.

Nach einer vorteilhaften Ausgestaltung des Verfahrens nach der Erfindung wird der Suspension ein ionogener Zusatzstoff zugegeben, der den pH-Wert der Suspension in Richtung auf den basischen Bereich (pH $\leq$ 10) verschiebt. Hiermit sind mehrere Vorteile verbunden: Der ionogene Zusatzstoff bewirkt zunächst eine Dispergierung der Feststoffteilchen (insbesondere im Ultraschallfeld) und fördert die gleichmäßige Vernetzung der Feststoffpartikel in der Suspension sowohl in bezug auf die Vernetzungsgeschwindigkeit als auch in bezug auf die Erhöhung der Bindungskraft der Feststoffpartikel untereinander.

Auf diese Weise sind homogenere, stabilisierte Suspensionen zu erreichen, was wiederum den Vorteil hat, daß im aus der Suspension geformten Grünkörper ein homogenes Porenvolumen vorliegt, so daß niedrigere Sintertemperaturen zum Erhalten eines blasen- und schlierenfreien Glaskörpers ausreichen, als wenn ein Grünkörper mit einem sehr inhomogenen Porenvolumen zu einem Glaskörper vergleichbarer Qualität gesintert werden müßte. Dies hat zur Folge, daß kostengünstigere Sinteröfen eingesetzt werden können; bei Sintertemperaturen bis zu 1550°C können Öfen mit einem SiC-Futter eingesetzt werden, bei Sintertemperaturen, die über 1550°C liegen, müssen Öfen mit höchsttemperaturfestem Futter, z.B. aus $MoSi_2$, eingesetzt werden; diese Öfen sind teurer als mit SiC ausgekleidete Öfen. Ein weiterer Vorteil einer möglichst niedrigen Sintertemperatur ist, daß mit steigender Sintertemperatur Rekristallisationseffekte auf der Oberfläche des Sinterkörpers zunehmen, die insbesondere dann störend und unerwünscht sind, wenn die Glaskörper als Vorformen für optische Wellenleiter verwendet werden sollen, da die mechanischen Eigenschaften sich stark verschlechtern (Gefahr der Rißbildung).

Wird nach einer vorteilhaften weiteren Ausgestaltung des Verfahrens nach der Erfindung als ionogener Zusatzstoff eine Ammoniumverbindung eingesetzt, ergibt sich der Vorteil, der Zusatzstoff leicht flüchtig ist und in einem nachfolgenden Reinigungs-Erhitzungsschritt rückstandslos aus dem Grünkörper entfernt werden kann, so daß Quarzglaskörper einer sehr hohen Reinheit herstellbar sind. Durch den Zusatz einer Ammoniumverbindung werden Grünkörper einer relativ hohen Festigkeit erreicht, da an den Kontaktstellen zweier $SiO_2$-Primärpartikel eine Gelbildung auftritt. $SiO_2$ wird an den Kontaktstellen ausgeschieden und bildet eine Brückenschicht.

Wird der Suspension nach einer vorteilhaften Weiterbildung des Verfahrens nach der Erfindung als ionogener Zusatzstoff eine 5%ige wässerige $NH_4F$-Lösung eingesetzt, kann eine Fluordotierung erreicht werden, die beispielsweise für die Herstellung von Mantelgläsern für optische Wellenleiter geeignet ist.

Nach einer vorteilhaften weiteren Ausgestaltung des Verfahrens nach der Erfindung wird der ionogene Zusatzstoff in einer Menge von 0,05 bis 5 Gew.%, bezogen auf den Feststoffanteil in der Suspension, zugegeben. Hiermit ist der Vorteil verbunden, daß der als Vernetzungsaktivator wirkende Zusatzstoff in einer solchen Menge vorliegt, daß gerade die Oberfläche der Feststoffpartikel in der Suspension mit Ionen des ionogenen Zusatzstoffes bedeckt ist. Die Menge des ionogenen Zusatzstoffes sollte nicht größer als 5 Gew.%, bezogen auf den Feststoffanteil der Suspension, sein, da sich sonst die Viskosität der Suspension stark erhöht, was die elektrophoretische Abscheidung ungünstig beeinflußt.

Nach einer weiteren vorteilhaften Ausgestaltung des Verfahrens nach der Erfindung wird ein Schichtkörper durch Abscheiden mehrerer Schichten nacheinander aus unterschiedlich dotierten Suspensionen hergestellt. Dazu wird nach Erreichen einer gewünschten Schichtdicke des Grünkörpers die erste Suspension aus der Vorrichtung entfernt und der Abscheideprozeß mit einer zweiten, z.B. anders als die erste Suspension dotierten Suspension fortgesetzt. Das vorliegende Verfahren ist damit besonders geeignet, Vorformen für optische Wellenleiter herzustellen, die ein Stufenprofil des Brechungsindex aufweisen.

Ebenfalls ist es möglich, einen optischen Wellenleiter mit W-Profil durch Einbau einer Zwischenschicht mit niedrigerem Brechungsindex, der durch Anwendung einer Suspension mit entsprechender Dotierung erhalten wird, herzustellen. Dotierstoffe zur Veränderung des Brechungsindex eines Glaskörpers sind dem Fachmann bekannt; beispielsweise werden hierzu zur Erhöhung des Brechungsindex $GeO_2$ oder $Al_2O_3$ und zur Erniedrigung des Brechungsindex $B_2O_3$ oder Fluor verwendet. Mit dem vorliegenden Verfahren ist es auch möglich, durch Abscheidung einer Vielzahl von abgestuft dotierten Schichten einen Quarzglaskörper mit angenähert kontinuierlichem Brechungsindexverlauf herzustellen.

Ausführungsbeispiele der Erfindung sind in der Zeichnung dargestellt und werden im folgenden näher beschrieben.

Es zeigen:

Fig. 1 Elektrophoresevorrichtung gemäß der Erfindung mit freitragender, gespannter Membran im Schnitt

Fig. 2 Elektrophoresevorrichtung gemäß der Erfindung mit einer selbsttragenden Membran im Schnitt.

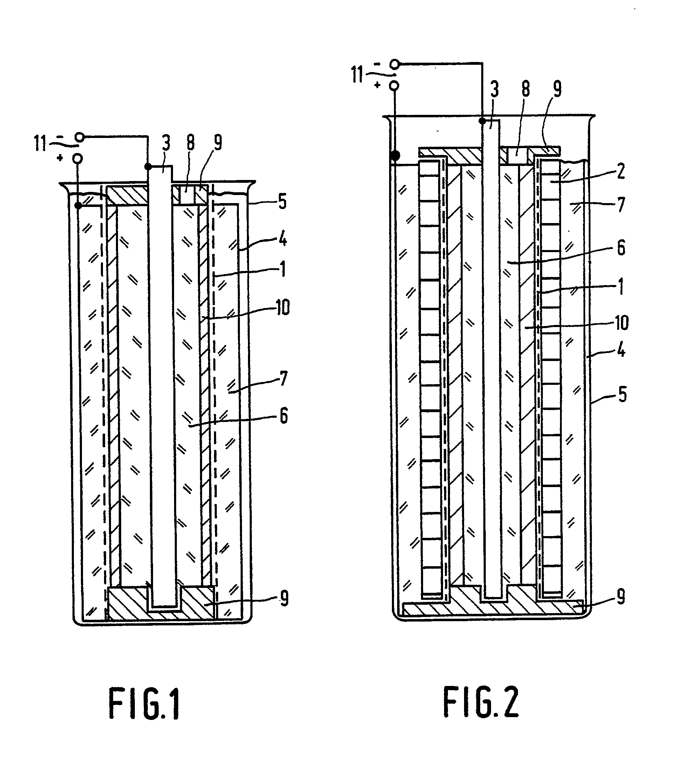

Gleiche Vorrichtungsteile der Elektrophoresevorrichtungen nach den Figuren 1 und 2 haben gleiche Bezugszeichen. In Figur 1 ist eine freitragend zwischen zwei Haltern 9 eingespannte Membran 1 in Form eines porösen Schlauches, z.B. eines Dialyseschlauches, dargestellt; in Figur 2 ist eine selbsttragende Membran dargestellt in Form eines porösen Stützkörpers 2 aus hydrophilem Material mit einer Porenweite von 1 bis 50μm, auf dem die poröse Membran 1 auf der Abscheidungsseite befestigt ist.

Im folgenden wird die Funktionsweise der Vorrichtungen gemäß den Figuren 1 und 2 gemeinsam beschrieben.

In einem Gefäß 5, vorzugsweise aus Labor- oder Quarzglas, werden konzentrisch eine Anode 4 und eine Kathode 3, an die eine Spannungsquelle über Elektrodenanschlüsse 11 angeschlossen wird, montiert. Die Elektroden 3, 4 bestehen vorzugsweise aus Edelmetall (z.B. Platin) oder Graphit, um eine Kontamination einer nach Phasen zu trennenden wässerigen Suspension 6 mit störenden Ionen der Übergangsmetalle (z.B. Kupfer) zu vermeiden. Ebenfalls konzentrisch zu dem Elektrodensystem 3, 4 wird eine Membran 1 zwischen den Elektroden 3, 4 angebracht. Diese Membran 1 hat Poren, die zumindest kleiner als der mittlere Teilchendurchmesser der Feststoffteilchen in der wässerigen Suspension 6 sind. Vorteilhaft ist eine Porengröße kleiner als 10 nm, was dem Durchmesser der kleinsten in der Suspension 6 vorhandenen Teilchen entspricht, und größer als 0,14 nm, was dem Ionendurchmesser von OH-Ionen entspricht. Dem Einsatz der Membran 1 liegt folgende Erkenntnis zugrunde: da nur die hochdispersen Feststoffteilchen der Suspension 6 von ihr zurückgehalten werden, wird die Abscheidung der beiden in der Suspension vorliegenden negativen Ladungsträger, nämlich OH-Ionen und $SiO_2$-Teilchen, räumlich getrennt. An der Anode 4 entstehender Sauerstoff kann wegen der Abtrennung durch die Membran 1 nicht mehr in eine auf der Membran 1 abgeschiedene Feststoffschicht 10 gelangen und stört so nicht mehr den homogenen Aufbau der Feststoffschicht 10. Auf diese Weise sind blasenfreie Feststoff-Abscheidungen aus wässerigen $SiO_2$-Suspensionen möglich. In den inneren, von der durch die aufgespannte Membran 1 gebildeten Raum zwischen der Kathode 3 und der Membran 1 wird die wässerige Suspension 6 mit einer unten angegebenen Zusammensetzung über eine Einfüllöffnung 8 eingefüllt. Eine Spannvorrichtung zum Spannen der freitragend angebrachten Membran gemäß Figur 1 ist in der Zeichnung nicht gesondert dargestellt. In den Außenraum zwischen der Membran 1 und der Anode 4 wird eine elektrisch leitende Flüssigkeit 7, vorzugsweise hochreines Wasser mit einem Elektrolytzusatz in Form eines ionogenen Stoffes, wie er auch für die Herstellung der Suspension verwendet wird und in dem Zusammensetzungs- und Konzentrationsbereich wie bei der Suspension, vorzugsweise mit der gleichen Zusammensetzung und Konzentration wie in der Suspension, eingegossen. Zur elektrophoretischen Abscheidung der Feststoffschicht 10 wird eine Gleichspannungsquelle bzw. eine Gleichstromquelle über Elektrodenanschlüsse 11 an die Elektroden 3,4 gelegt. Da nur bei angelegter Spannung eine Abscheidung erfolgt, können leicht hintereinander durch Austauschen der Suspension gegen andere Suspensionen mit unterschiedlichen Dotierungen Schichten abgeschieden werden, die nach dem Sintern zu einem Glas mit einem Brechungsindexgradienten führen.

Die Stromdichte liegt bei der Abscheidung zwischen 0,1 und 100 $mA/cm^2$. Dies ergibt Abscheideraten von 3 bis 300 $mg/cm^2/min$; dies entspricht bei einem 1 m langen Rohr mit einem Durchmesser von 30 mm einer Abscheidungsmenge von 2 bis 200 g/min.

Nach Beendigung des Abscheidungsvorganges wird die abgeschiedene Feststoffschicht 10 von der Membran 1 oder von dem Stützkörper 2 mit der Membran 1 getrennt, getrocknet und wie weiter unten beschrieben, zu einem Glaskörper gesintert.

Die für die elektrophoretische Phasentrennung verwendete Suspension wurde wie folgt hergestellt: es werden 200 g eines hochdispersen Quarzglaspulvers mit einem Teilchendurchmesser von 15 bis 100 nm mit einer mittleren Teilchengröße von 40 nm mit 280 ml hochreinem Wasser sowie 20 ml einer 5%igen, wässerigen $NH_4F$-Lösung verrührt und 10 min lang in einem Ultraschallbad mit einer Frequenz f= 35 kHz homogenisiert.

Die so hergestellte Suspension wird gemäß einem ersten Beispiel in einen leicht gespannten Dialyseschlauch als Membran 1 aus regenerierter Zellulose mit einer Porenweite von 5 nm und einem Durchmesser von 21 mm, in dem sich als Kathode 3 ein Platinstab mit 2 mm Durchmesser konzentrisch befindet, eingegossen. Zwischen der Membran 1 und der Anode 4, die in diesem Beispiel ein zu einem Rohr gebogenes Platinblech mit einem Innendurchmesser von 34 mm ist, befindet sich eine Lösung aus hochreinem Wasser mit einem Zusatz von 0,3 Gew.% $NH_4F$. Es wird 10 min lang mit einer konstanten Stromdichte von 16 $mA/cm^2$ abgeschieden. Die Abscheidegeschwindigkeit beträgt 0,09 $g/cm^2/min$ und die Schichtdicke der abgeschiedenen Feststoffschicht 10 beträgt dabei 3 mm.

Anschließend wird die verarmte Suspension aus der Membran 1 mit der abgeschiedenen Feststoffschicht 10 ausgegossen und die Membran 1 wird von der abgeschiedenen Feststoffschicht 10 abgetrennt. Wird eine Membran in Form eines Dialyseschlauches eingesetzt, läßt sich dieser in schmalen Streifen spiralförmig ohne Beschädigung der glänzenden Oberfläche der abgeschiedenen Feststoffschicht 10 abziehen.

Nach einer langsamen Trocknung über eine Dauer von 24 h wird der getrocknete Grünkörper mit einer Dichte von 52%, bezogen auf die Dichte kompakten Quarzglases, in 3 h auf 900°C aufgeheizt und über eine Dauer von 4 h in einer strömenden Sauerstoffatmosphäre mit 6 Vol% Chlorgaszusatz gereinigt. Die abschließende Sinterung zu einem blasen- und schlierenfreien transparenten Quarzglaskörper erfolgt bei 1500°C in einer Heliumatmosphäre mit 2 Vol.% Chlorgaszusatz bei einer Absenkgeschwindigkeit des zu sinternden Grünkörpers von 3 mm/min durch den Ofen.

Es wurde ein Quarzglasrohr mit einer glänzenden, strukturfreien Oberfläche erhalten. Das auf diese Weise hergestellte Glas hatte eine Dichte von 2,20 $g/cm^3$, einen Brechungsindex $n_D$=1,4579 und wies Verunreinigungen an Wasser und Übergangsmetallen < 10 ppb auf. Der Außendurchmesser des auf diese Weise hergestellten hochreinen Quarzglasrohres betrug 17 mm.

Statt eines gespannten Dialyseschlauches als Membran 1 kann gemäß einem zweiten Beispiel auch eine auf einem porösen Stützkörper 2 in Form eines Filterrohres angeordnete Membran 1 eingesetzt werden. Hierzu wird ein zweiteiliges hydrophiles Polyäthylenrohr mit einer Porenweite von 10μm, einem Außendurchmesser von 32 mm und einem Innendurchmesser von 24 mm eingesetzt, das auf der Innenseite mit einer durchgehenden Nitrozelluloseschicht als Membran 1 mit einer Porenweite von 10 nm beschichtet worden ist. Ein Grünkörper wird in gleicher Weise wie zu Beispiel 1 beschrieben, abgeschieden, nach Öffnen der zweiteiligen Form getrocknet, gereinigt und gesintert. Zum vorteilhaften Entformen, insbesondere von nichtzylindersymmetrischen Hohlkörpern, kann der poröse Stützkörper aus mehreren, trennbaren Teilen bestehen. Die Membran 1 auf der Innenseite des Stützkörpers 2 überspannt nahtlos die Formtrennstellen und wird erst beim Entformen des aus der Suspension 6 abgeschiedenen Grünkörpers in Form der Feststoffschicht 10 entfernt. Der auf diese Weise hergestellte Quarzglaskörper hatte die gleichen Eigenschaften wie zu Beispiel 1 beschrieben.

Mit dem vorliegenden Verfahren ergeben sich zusammengefaßt die folgenden Vorteile:
Es können hochreine Quarzglasformkörper hergestellt werden, bei denen Verunreinigungen an Wasser und Übergangsmetallen nur im ppb-Bereich vorliegen; die erhaltenen Glaskörper haben innen und außen glänzende, strukturfreie Oberflächen; durch den selbstregelnden Ausgleichsmechanismus bei der Abscheidung kann eine gleichmäßige Wandstärke der abgeschiedenen Grünkörper erreicht werden; es ergeben sich relativ hohe Abscheideraten; es kann mit einer sehr einfachen Apparatur gearbeitet werden; der Einsatz von wässerigen Suspensionen ist möglich, ohne daß durch Sauerstoffentwicklung gebildete Poren im abgeschiedenen Grünkörper entstehen; es ist ein relativ großer Spielraum in bezug auf die Porenweite der Membran gegeben, ohne daß die Abscheidegeschwindigkeit wesentlich beeinflußt wird.

Gläser, die für optische Wellenleiter geeignet sind, sind ebenfalls mit Vorteil verwendbar für die Herstellung von Lampenkolben für Halogen- oder Gasentladungslampen, denn diese Gläser müssen, ebenso wie die Gläser für optische Wellenleiter, nahezu wasserfrei sein und einen hohen Siliciumdioxidgehalt aufweisen.

## Patentansprüche

1. Verfahren zur Herstellung von Glaskörpern, bei dem aus dem Ausgangsmaterial für den Glaskörper in Form einer wässerigen Suspension mit hochdispersem Feststoffanteil ein poröser Grünkörper geformt und dieser anschließend gereinigt und gesintert wird, dadurch gekennzeichnet, daß der Grünkörper durch Trennung der Phasen der Suspension (6) mittels Elektrophorese abgeschieden wird.

2. Verfahren nach Anspruch 1, dadurch gekennzeichnet, daß der Feststoffanteil der Suspension (6) auf einer porösen Membran (1) mit Poren eines Durchmessers, der kleiner als der mittlere Teilchendurchmesser der in der Suspension vorhandenen Feststoffteilchen ist, abgeschieden wird, wobei die Membran zwischen der Anode (4) und der Kathode (3) angeordnet und der Raum zwischen der Membran und der Anode mit einer elektrisch leitenden Flüssigkeit (7) gefüllt wird.

3. Verfahren nach Anspruch 2, dadurch gekennzeichnet, daß als elektrisch leitende Flüssigkeit (7) Wasser mit einem zugesetzten Elektrolyten eingesetzt wird.

4. Verfahren nach Anspruch 3, dadurch gekennzeichnet, daß als Elektrolyt ein ionogener Stoff zugegeben wird, der den pH-Wert der elektrisch leitenden Flüssigkeit in Richtung auf den basischen Bereich (pH ≤ 10) verschiebt.

5. Verfahren nach Anspruch 4, dadurch gekennzeichnet, daß als ionogener Stoff eine Ammoniumverbindung zugesetzt wird.

6. Verfahren nach Anspruch 5, dadurch gekennzeichnet, daß als ionogener Stoff eine 5%ige wässerige $NH_4F$-Lösung eingesetzt wird.

7. Verfahren nach einem der Ansprüche 1 bis 6, dadurch gekennzeichnet, daß der Feststoffanteil der Suspension (6) bei einer Stromdichte von 0,1 bis 100 mA/cm² Elektrodenfläche abgeschieden wird.

8. Verfahren nach Anspruch 7, dadurch gekennzeichnet, daß der Feststoffanteil der Suspension (6) bei einer Stromdichte von 16 mA/cm² Elektrodenfläche abgeschieden wird.

9. Verfahren nach Anspruch 2, dadurch gekennzeichnet, daß eine poröse Membran (1) eingesetzt wird, die Poren eines Porendurchmessers < 10 nm und > 0,14 nm hat.

10. Verfahren nach Anspruch 9, dadurch gekennzeichnet, daß eine Membran (1) in Form eines porösen Kunststoffschlauches eingesetzt wird.

11. Verfahren nach einem der Ansprüche 1 bis 10, dadurch gekennzeichnet, daß eine Anode (4) aus einem nichtmetallischen, elektrisch gut leitenden Material eingesetzt wird.

12. Verfahren nach Anspruch 11, dadurch gekennzeichnet, daß eine Anode (4) aus Graphit eingesetzt wird.

13. Verfahren nach einem der Ansprüche 1 bis 10, dadurch gekennzeichnet, daß eine Anode (4) aus einem Edelmetall eingesetzt wird.

14. Verfahren nach Anspruch 13, dadurch gekennzeichnet, daß eine Anode (4) aus Platin eingesetzt wird.

15. Verfahren nach einem der Ansprüche 1 bis 14, dadurch gekennzeichnet, daß als Ausgangsmaterial für den Glaskörper eine wässerige Suspension (6) eingesetzt wird, die $SiO_2$-Partikel eines Durchmessers im Bereich von 10 bis 500 nm, vorzugsweise 15 bis 100 nm, mit einem mittleren Teilchendurchmesser von 40 nm enthält.

16. Verfahren nach Anspruch 15, dadurch gekennzeichnet, daß eine Suspension (6) mit einem Feststoff-Wasser-Gewichts-Verhältnis von 1:1 bis 1:4 eingesetzt wird.

17. Verfahren nach Anspruch 15 oder 16, dadurch gekennzeichnet, daß der Suspension (6) ein ionogener Zusatzstoff zugegeben wird, der den pH-Wert der Suspension in Richtung auf den basischen Bereich (pH ≤ 10) verschiebt.

18. Verfahren nach Anspruch 17, dadurch gekennzeichnet, daß als ionogener Zusatzstoff eine Ammoniumverbindung zugesetzt wird.

19. Verfahren nach Anspruch 18, dadurch gekennzeichnet, daß als ionogener Zusatzstoff eine 5%ige wässerige NH4F-Lösung eingesetzt wird.

20. Verfahren nach einem der Ansprüche 17 bis 19, dadurch gekennzeichnet, daß der ionogene Zusatzstoff in einer Menge von 0,05 bis 5 Gew.%, bezogen auf den Feststoffanteil in der Suspension (6), zugegeben wird.

21. Verfahren nach einem der Ansprüche 17 bis 20, dadurch gekennzeichnet, daß der Elektrolyt der elektrisch leitenden Flüssigkeit (7) in einer der Konzentration des ionogenen Zusatzstoffes in der Suspension (6) entsprechenden Konzentration zugesetzt wird.

22. Verfahren nach einem der Ansprüche 1 bis 21, dadurch gekennzeichnet, daß ein Schichtkörper durch Abscheiden mehrerer Schichten (10) nacheinander aus unterschiedlich dotierten Suspensionen (6) hergestellt wird.

23. Verfahren nach Anspruch 22, dadurch gekennzeichnet, daß Suspensionen (6) mit Dotierstoffen eingesetzt werden, die unterschiedliche Brechungsindices des herzustellenden Glaskörpers bewirken.

24. Verfahren nach den Ansprüchen 1 bis 23, dadurch gekennzeichnet, daß die hergestellten Glaskörper als Vorformen für optische Wellenleiter eingesetzt werden.

25. Verfahren nach den Ansprüchen 1 bis 23, dadurch gekennzeichnet, daß die hergestellten Glaskörper als Lampenkolben, insbesondere für Halogen- oder Gasentladungslampen, eingesetzt werden.

26. Vorrichtung zur Durchführung des Verfahrens nach den Ansprüchen 1 bis 25 mit einem Gefäß zur Aufnahme von nach Phasen zu trennendem Ausgangsmaterial für den herzustellenden Glaskörper in Form einer Suspension, gekennzeichnet durch eine zentrisch in dem Gefäß (5) angeordnete der Form des herzustellenden Grünkörpers entsprechende poröse Membran (1), innerhalb welcher zentrisch eine Kathode (3) angeordnet ist, wobei der Innenraum der Membran zur Aufnahme des nach Phasen zu trennenden Ausgangsmaterials in Form einer Suspension (6) vorgesehen und der Raum zwischen der Membran und einer im Abstand zur Membran angeordneten Anode (4) mit einer elektrisch leitenden Flüssigkeit (7) ausgefüllt ist, wobei die Anode und die Kathode über Elektrodenanschlüsse (11) mit einer nicht dargestellten Spannungsquelle elektrisch verbunden sind.

27. Vorrichtung nach Anspruch 26, dadurch gekennzeichnet, daß die Membran (1) Poren eines Porendurchmessers < 10 nm und > 0,14 nm hat.

28. Vorrichtung nach Anspruch 26 oder 27, dadurch gekennzeichnet, daß die Membran (1) auf einem porösen Stützkörper (2) mit Poren, die größer sind als die Poren der Membran, angeordnet ist.

29. Vorrichtung nach einem der Ansprüche 26 bis 28, dadurch gekennzeichnet, daß die Membran (1) zylinderförmig ist, auf welcher ein rohrförmiger Grünkörper in Form einer Feststoffschicht (10) abscheidbar ist.

30. Vorrichtung nach einem der Ansprüche 26 bis 29, dadurch gekennzeichnet, daß die Membran (1) aus porösem Kunststoff besteht.

31. Vorrichtung nach einem der Ansprüche 26 bis 30, dadurch gekennzeichnet, daß die Elektroden (3, 4) aus Edelmetall bestehen.

32. Vorrichtung nach Anspruch 31, dadurch gekennzeichnet, daß die Elektroden (3, 4) aus Platin bestehen.

33. Vorrichtung nach einem der Ansprüche 26 bis 30, dadurch gekennzeichnet, daß die Elektroden (3, 4) aus einem nichtmetallischen, elektrisch leitfähigem Material bestehen.

34. Vorrichtung nach Anspruch 33, dadurch gekennzeichnet, daß die Elektroden (3, 4) aus Graphit bestehen.

**Claims**

1. Method for the manufacture of glass bodies, in which a porous green body is formed from the starting material for the glass body in the form of an aqueous suspension with a highly disperse solids content and this green body is then purified and sintered, characterized in that the green body is deposited by phase separation of the suspension (6) by means of electrophoresis.

2. Method as claimed in claim 1, characterized in that the solids content of the suspension (6) is deposited on a porous membrane (1) with pores of a diameter which is smaller than the average particle diameter of the solid particles present in the suspension, the membrane being arranged between the cathode (3) and the anode (4) and the space between the membrane and the anode being filled with an electrically conducting liquid (7).

3. Method as claimed in claim 2, characterized in that the electrically conducting liquid is water with an added electrolyte.

4. Method as claimed in claim 3, characterized in that the added electrolyte is an ionogenic substance with shifts the pH-value of the electrically conducting liquid towards the basic region (pH ≤ 10).

5. Method as claimed in claim 4, characterized in that an ammonium compound is added as the ionogenic substance.

6. Method as claimed in claim 5, characterized in that a 5% aqueous NH4F-solution is used as the ionogenic substance.

7. Method as claimed in any one of the claims 1 up to and including 6, characterized in that the solids content of the suspension (6) is deposited at a current density of 0.1 to 100 mA/cm$^2$ electrode surface.

8. Method as claimed in claim 7, characterized in that the solids content of the suspension (6) is deposited at a current density of 16 mA/cm$^2$ electrode surface.

9. Method as claimed in claim 2, characterized in that a porous membrane (1) is used which has pores with a diameter of < 10 nm and > 0.14 nm.

10. Method as claimed in claim 9, characterized in that a membrane (1) in the form of a porous hose of synthetic material is used.

11. Method as claimed in any one of the claims 1 up to and including 10, characterized in that an anode (4) of non-metallic material with good electrical conductivity is used.

12. Method as claimed in claim 11, characterized in that an anode (4) made of graphite is used.

13. Method as claimed in any one of the claims 1 up to and including 10, characterized in that an anode (4) made of a noble metal is used.

14. Method as claimed in claim 13, characterized in that an anode (4) made of platinum is used.

15. Method as claimed in any one of the claims 1 up to and including 14, characterized in that the starting material for the glass body is an aqueous suspension (6) which contains $SiO_2$ particles with a diameter in the range from 10 to 500 nm, preferably 15 to 100 nm, having an average particle diameter of 40 nm.

16. Method as claimed in claim 15, characterized in that a suspension (6) with a solids:water weight ratio of 1:1 to 1:4 is used.

17. Method as claimed in claim 15 or 16, characterized in that an ionogenic substance which shifts the pH-value of the suspension towards the basic region (pH $\leq$ 10) is added to the suspension (6).

18. Method as claimed in claim 17, characterized in that the ionogenic substance added is an ammonium compound.

19. Method as claimed in claim 17, characterized in that a 5% aqueous $NH_4F$-solution is used as the ionogenic additive.

20. Method as claimed in any of the claims 17 up to and including 19, characterized in that the ionogenic substance is added in a quantity of 0.05 to 5 wt.% of the solids content in the suspension (6).

21. Method as claimed in any of the claims 17 up to and including 20, characterized in that the electrolyte is added to the electrically conducting liquid (7) in a concentration corresponding to the concentration of the ionogenic additive in the suspension (6).

22. Method as claimed in any one of the claims 1 up to and including 21, characterized in that a laminated body is produced by depositing several layers (10) in succession from differently doped suspensions (6).

23. Method as claimed in claim 22, characterized in that suspensions (6) with dopants which bring about different refractive indices of the glass body being produced are used.

24. Method as claimed in claims 1 up to and including 23, characterized in that the glass bodies manufactured are used as preforms for optical waveguides.

25. Method as claimed in claims 1 up to and including 23, characterized in that the glass bodies manufactured are used as lamp envelopes, especially for halogen or gas discharge lamps.

26. Device for the implementation of the method as claimed in claims 1 up to and including 23, comprising a vessel for holding starting material for the glass body to be manufactured, said starting material being in the form of a suspension which is to be separated into phases, characterized by a porous membrane (1) which is centrally arranged in the vessel (5) and the shape of which corresponds to the shape of the green body to be produced, a cathode (3) being centrally arranged in the membrane, the interior space of the membrane being designed to hold starting material in the form of a suspension (6) which is to be separated into phases and the space between the membrane and an anode (4) arranged at a distance from the membrane being filled with an electrically conducting liquid (7), the anode and the cathode being electrically connected to a voltage source, not shown, by means of electrode terminals (11).

27. Device as claimed in claim 24, characterized in that the membrane (1) has pores with a diameter of < 10 nm and > 0.14 nm.

28. Device as claimed in claim 24 or 25, characterized in that the membrane (1) is arranged on a porous supporting body (2) with pores which are larger than the pores of the membrane.

29. Device as claimed in one of the claims 26 up to and including 28, characterized in that the membrane (1) is cylindrical, and a tubular green body can be deposited on it in the form of a solid layer (10).

30. Device as claimed in one of the claims 26 up to and including 29, characterized in that the membrane (1) is made of porous synthetic material.

31. Device as claimed in one of the claims 26 up to and including 30, characterized in that the electrodes (3, 4) are made of nobel metal.

32. Device as claimed in claim 31, characterized in that the electrodes (3, 4) are made of platinum.

33. Device as claimed in one of the claims 26 up to and including 30, characterized in that the electrodes (3, 4) are made of a non-metallic, electrically conductive material.

34. Device as claimed in claim 33, characterized in that the electrodes (3, 4) are made of graphite.

## Revendications

1. Procédé de fabrication de corps en verre, suivant lequel un corps vert poreux est façonné à partir de la matière première pour le corps en verre sous la forme d'une suspension aqueuse contenant des solides hautement dispersés et est ensuite épuré et fritté, caractérisé en ce que le corps vert est déposé par séparation des phases de la suspension (6) au moyen d'une électrophorèse.

2. Procédé suivant la revendication 1, caractérisé en ce que les solides de la suspension (6) sont déposés sur une membrane poreuse (1) dont les pores ont un diamètre qui est inférieur au diamètre moyen de particules des solides présents dans la suspension, la membrane étant agencée entre l'anode (4) et la cathode (3) et l'espace entre la membrane et l'anode étant rempli d'un liquide (7) conducteur de l'électricité.

3. Procédé suivant la revendication 2, caractérisé en ce que de l'eau contenant un électrolyte ajouté est utilisée comme liquide (7) conducteur de l'électricité.

4. Procédé suivant la revendication 3, caractérisé en ce qu'une substance ionogène, qui déplace le pH du liquide conducteur de l'électricité vers le domaine basique (pH ≤ 10) est ajouté comme électrolyte.

5. Procédé suivant la revendication 4, caractérisé en ce qu'un composé d'ammonium est ajouté comme substance ionogène.

6. Procédé suivant la revendication 5, caractérisé en ce qu'une solution aqueuse à 5% de NH₄F est ajoutée comme substance ionogène.

7. Procédé suivant l'une quelconque des revendications 1 à 6, caractérisé en ce que les solides de la suspension (6) sont déposés sous une densité de courant de 0,1 à 100 mA par cm² de surface des électrodes.

8. Procédé suivant la revendication 7, caractérisé en ce que les solides de la suspension (6) sont déposés sous une densité de courant de 16 mA par cm² de surface des électrodes.

9. Procédé suivant la revendication 2, caractérisé en ce qu'on utilise une membrane poreuse (1) qui comprend des pores ayant un diamètre < 10 nm et > 0,14 nm.

10. Procédé suivant la revendication 9, caractérisé en ce qu'on utilise une membrane (1) sous la forme d'un tube souple poreux en matière plastique.

11. Procédé suivant l'une quelconque des revendications 1 à 10, caractérisé en ce qu'on utilise une anode (4) faite d'une matière non métallique bonne conductrice de l'électricité.

12. Procédé suivant la revendication 11, caractérisé en ce qu'on utilise une anode (4) en graphite.

13. Procédé suivant l'une quelconque des revendications 1 à 10, caractérisé en ce qu'on utilise une anode (4) en métal noble.

14. Procédé suivant la revendication 13, caractérisé en ce qu'on utilise une anode (4) en platine.

15. Procédé suivant l'une quelconque des revendications 1 à 14, caractérisé en ce qu'on utilise comme matière première pour le corps en verre, une suspension aqueuse (6) qui contient des particules de SiO₂ d'un diamètre du domaine de 10 à 500 nm et, de préférence de 15 à 100 nm, avec une granulométrie moyenne de 40 nm.

16. Procédé suivant la revendication 15, caractérisé en ce qu'on utilise une suspension (6) présentant un rapport pondéral solides:eau de 1:1 à 1:4.

17. Procédé suivant la revendication 15 ou 16, caractérisé en ce qu'on ajoute à la suspension (6) un additif ionogène qui déplace le pH de la suspension vers le domaine basique (pH ≤ 10).

18. Procédé suivant la revendication 17, caractérisé en ce qu'on ajoute un composé d'ammonium comme additif ionogène.

19. Procédé suivant la revendication 18, caractérisé en ce qu'on ajoute une solution aqueuse à 5% de NH₄F comme additif ionogène.

20. Procédé suivant l'une quelconque des revendications 17 à 19, caractérisé en ce qu'on ajoute l'additif ionogène en une quantité de 0,05 à 5% en poids, sur la base des solides de la suspension (6).

21. Procédé suivant l'une quelconque des revendications 17 à 20, caractérisé en ce qu'on ajoute l'électrolyte au liquide (7) conducteur de l'électricité en une concentration correspondant à la concentration de l'additif ionogène de la suspension (6).

22. Procédé suivant l'une quelconque des revendications 1 à 21, caractérisé en ce qu'on fabrique un corps feuilleté par dépôt de plusieurs couches (10) en succession à partir de suspensions (6) différemment dopées.

23. Procédé suivant la revendication 22, caractérisé en ce qu'on utilise des suspensions (6) contenant des substances dopantes qui confèrent des indices de réfraction différents au corps en verre à fabriquer.

24. Procédé suivant l'une quelconque des revendications 1 à 23, caractérisé en ce qu'on utilise les corps en verre fabriqués comme ébauches pour des guides d'ondes optiques.

25. Procédé suivant l'une quelconque des revendications 1 à 23, caractérisé en ce qu'on utilise les corps en verre fabriqués comme enveloppes de lampes, en particulier pour des lampes à halogène et à décharge gazeuse.

26. Dispositif pour l'exécution du procédé suivant les revendications 1 à 23, comprenant un récipient pour contenir la matière première pour le corps en verre à fabriquer sous la forme d'une suspension à séparer en ses phases, caractérisé par une membrane poreuse (1) agencée centralement dans le récipient (5) et correspondant à la forme du corps vert qu'il faut fabriquer, à l'intérieur de laquelle une cathode (3) est agencée centralement, l'espace intérieur de la membrane étant prévu pour contenir la matière première sous la forme d'une suspension (6) à séparer en ses phases et l'espace entre la membrane et une anode (4) agencée à distance de la membrane étant rempli d'un liquide (7) conducteur de l'électricité, l'anode et la cathode étant connectées aux connexions d'électrodes (11) avec une source de tension non représentée.

27. Dispositif suivant la revendication 26, caractérisé en ce que la membrane (1) comporte des pores d'un diamètre < 10 nm et > 0, 14 nm.

28. Dispositif suivant la revendication 24 ou 25, caractérisé en ce que la membrane (1) est adaptée sur un corps de support poreux (2) dont les pores sont plus grands que les pores de la membrane.

29. Dispositif suivant l'une quelconque des revendications 26 à 28, caractérisé en ce que la membrane (1) a la forme d'un cylindre, sur lequel peut être déposé un corps vert tubulaire ayant la forme d'une couche de solides (10).

30. Dispositif suivant l'une quelconque des revendications 26 à 29, caractérisé en ce que la membrane (1) consiste en une résine synthétique poreuse.

31. Dispositif suivant l'une quelconque des revendications 26 à 30, caractérisé en ce que les électrodes (3, 4) sont constituées en un métal noble.

32. Dispositif suivant la revendication 31, caractérisé en ce que les électrodes (3, 4) sont constituées en platine.

33. Dispositif suivant l'une quelconque des revendications 26 à 30, caractérisé en ce que les électrodes (3, 4) sont constituées en une matière non métallique conductrice de l'électricité.

34. Dispositif suivant la revendication 33, caractérisé en ce que les électrodes (3, 4) sont constituées en graphite.

FIG.1

FIG.2